(19) Europäisches Patentamt
European Patent Office
Office européen des brevets

(11) EP 4 538 980 A1

(12) **EUROPEAN PATENT APPLICATION**

(43) Date of publication:
16.04.2025 Bulletin 2025/16

(51) International Patent Classification (IPC):
*G06T 11/00* (2006.01)

(21) Application number: 23202988.4

(22) Date of filing: 11.10.2023

(52) Cooperative Patent Classification (CPC):
**G06T 11/005;** G06T 2211/408; G06T 2211/436;
G06T 2211/441; G06T 2211/444

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Koninklijke Philips N.V.**
**5656 AG Eindhoven (NL)**

(72) Inventors:
• **BRENDEL, Bernhard Johannes**
**Eindhoven (NL)**
• **SCHNELLBÄCHER, Nikolas David**
**Eindhoven (NL)**
• **VAN NIJNATTEN, Fred Simon Berend**
**5656AG Eindhoven (NL)**

(74) Representative: **Philips Intellectual Property &**
**Standards**
**High Tech Campus 52**
**5656 AG Eindhoven (NL)**

(54) **IMAGE-BASED ANTI-ALIASING FOR MISSING VIEW INTERPOLATION**

(57)    An image processing system (SYS) and related method. The system (SYS) may comprise an interface (IN) through which is receivable two input images (*m1, m2*), reconstructable from initial projection data (λ) including sets of projection data (λ1, λ2) acquirable by a tomographic imaging apparatus (IA). The two sets are complementary. System (SYS)'s trained machine learning model (M) computes, based on the two input images (*m1,m2*), two output images (*m1',m2'*). A domain transformer (DT) transforms the two output images (m1', m2') from image domain into projection domain, to so obtain new projection data (λ'). An output interface (OUT) outputs the new projection data (λ') and the initial projection data (λ) for reconstruction into at a further image (*m1", m2"*). The system (SYS) may be used in spectral imaging, in particular of the kVp-switching type.

FIG. 3

EP 4 538 980 A1

**Description**

FIELD OF THE INVENTION

The invention relates to an image processing system, to an arrangement including such a system, to a training system for training, on training data, a machine learning model for use in such a system, to a training data generator system for providing such training data, to related methods, to a computer program element, and to a computer readable medium.

BACKGROUND OF THE INVENTION

Sparse-view tomographic reconstructions typically suffer from strong aliasing artifacts in images in image domain. Classically, sinogram completion / interpolation methods try to synthesize missing projection views to mitigate such, mainly streak, artifacts in the images. An exemplary use-case for this is the fast kVp-switching technique, where, during projection data acquisition, a tube voltage of a tomographic X-ray system rapidly alternates between a low and a high peak tube voltage (kVp-value). This results ideally in projection data in which, for example even-numbered, projections are acquired with one kVp level, and odd-numbered projections with the other kVp level. I.e., the acquisition sampling of projection data for one kVp level is by a factor of two lower than for non-kVp-switching acquisitions. The kVp-switching technique is one possible method which enables spectral imaging on conventional X-ray systems (having single tube, and standard detector).

It appears, a good number of projection-domain sinogram completion / interpolation algorithms are prone to smooth the sinogram data as a byproduct of their processing. However, it has been found that any unwanted smoothing in the sinogram domain typically results in a loss of detail or blurred image reconstructions, hence reducing overall image quality. and hence the diagnostic value of the image.

SUMMARY OF THE INVENTION

There may therefore be a need for improved tomographic imaging.

An object of the present invention is achieved by the subject matter of the independent claims, with further embodiments incorporated in the dependent claims. It should be noted that the following described aspect of the invention equally applies to the arrangement including such a system, to the training system for training, on training data, the machine learning model for use in the said system, to the training data generator system for providing the training data, to the related methods, to the computer program element and to the computer readable medium.

According to a first aspect of the invention there is provided an image processing system, comprising:

at least one interface through which is receivable at least two input images, reconstructable from initial projection data in a first pass reconstruction operation, the initial projection data set including sets of projection data acquirable by a tomographic imaging apparatus, the two sets being complementary;
at least one trained machine learning model capable of computing, based on the two input images, at least two output images;
at least one domain transformer capable of transforming the at least two output images from image domain into projection domain, to so obtain new projection data; and
an output interface for making available the new projection data and the initial projection data for reconstruction into at least one further image.

The new projection data is completing in that is represents views that were missing in the (sparse) initial projection data. Together, they form a complete set of artifact reduced, even artifact free, reconstruction operation in a (second) pass.

In embodiments, the system further comprises a reconstructor capable of reconstructing the at least one further image based on the new projection data and the initial projection data.

In embodiments, the machine learning model is based on at least one artificial neural network model.

In embodiments, the tomographic imaging apparatus is configured for spectral imaging. In embodiments, the at least two sets of projection data corresponding to different acquisition energies.

In embodiments, the two sets of projection data corresponding to different acquisition projection directions.

In embodiments, the at least one domain transformer is capable of performing a forward-projection operation.

In embodiments, the at least one domain transformer is based on a trained machine learning model.

In embodiments, there are at least two such further images made available, and the system comprising a spectral imaging processor capable of any one of: i) applying a spectral processing algorithm to the two further images to obtain spectral imagery and ii) applying the spectral processing algorithm to the new projection data and making such available for reconstruction to so obtain the spectral imagery. Thus, spectral processing may be done in image or projection domain, as needed.

In another aspect there is provided a training system capable of training, based on training data, the model of a system as per any one of the above aspects or embodiments.

In another aspect there is provided a training data generator system, capable of providing the training data for the training system.

In another aspect there is provided an imaging arrangement comprising the system per any one any one of the above aspects or embodiments, and the imaging apparatus.

In yet another aspect there is provided an image processing method, comprising:

receiving at least two input images, reconstructable from initial projection data including sets of projection data acquirable by a tomographic imaging apparatus, the two sets being complementary;

applying at least one trained machine learning model to compute, based on the two input images, at least two output images;

domain-transforming the at least two output images from image domain into projection domain, to so obtain new projection data; and

providing the new projection data and the initial projection data for reconstruction into at least one further image.

In yet another aspect there is provided a machine learning training method for training, based on training data, the model of a system or method per any one any one of the above aspects or embodiments.

In yet another aspect there is provided s training data generator method for providing the training data for the training system or for the machine learning training method.

In yet another aspect there is provided a computer program element, which, when being executed by at least one processing unit, is adapted to cause the processing unit to perform the method as per any one any one of the above aspects or embodiments.

In yet another aspect there is provided at least one computer readable medium having stored thereon the program element, or having stored thereon the trained machine learning model.

In yet another aspect there is provided a use of trained machine learning model is a system or method of any one of the above aspects or embodiments.

What is proposed herein in some embodiments is a to first-pass-reconstruct images from kVp-switching scenarios without projection completion, then do an artifact correction in these images, preferably ML based, then do a forward projection of the so corrected images, and combine original projection data with forward projected data for projection completion, Then, a second pass reconstruction may be done with the completed projection data, to so obtain an artifact free/reduced image that is consistent with the original projection data.

Thus, the proposed pipeline may be summarized as 1st (pass) reconstruction -> artifact correction -> forward projection -> projection completion - > 2nd (pass) reconstruction.

Thus, in embodiments, the system may include or have access to:

- the image reconstructor, allowing to reconstruct measured sinogram data, possibly including common artifact corrections methods, such as beam-hardening-, motion-, scatter-correction algorithms.
- image-based anti-aliasing correction algorithm, which can be a data-driven machine learning algorithm utilizing deep convolutional neural networks (eg, "deep" CNNs).
- forward projector, to go back from the corrected images to the projection domain and therewith completing missing projection views.

As said, the proposed system and method may be used in an at least two-level fast kVp-switching scenario. In this case, the acquisition will provide a set of low kVp views interleaved with a set of high kVp views. An individual reconstruction of these two projection data sets will give a low-kVp and a high-kVp image, respectively, both suffering from strong aliasing/streak artifacts because of the sparse sampling of the projections.

The proposed system and methods help avoid the above mentioned unwanted smoothing problem by switching into image-space, where, it has emerged, such unwanted smoothing effects are easier to control or may be avoided altogether. The herein proposed missing view interpolation technique is especially applicable to such (fast) kVp-switching scenarios, in which the quality of each image for a given kVp level is deteriorated due to the lower acquisition sampling frequency of the projection data. However, across channels, the deterioration has been found to be complementary, and it is proposed herein to harness this, in particular to effect data-driven regularization in machine learning ("ML")- aided applications as envisaged herein in some embodiments.

Preferably, the said complementarity may be used to train two or more such ML models, for each channel independently, whilst some or preferably all/each model receives in training the, preferably full (complementary), data set at the input for processing.

In an ML setup, the proposed image-based aliasing correction algorithm can be trained in a supervised manner by using both kVp level images as input and training it against the corresponding full view reconstruction of one kVp level. In this way, two sets of network/ML model weights may be learned, one for the prediction/estimation of the low kVp data, and one for the prediction of the high kVp data. Preferably, for some or each channel/processing branch, the information from both, the low and high kVp image, are used as input.

Having obtained corrected low and high kVp image volumes, the image processing pipeline can be continued with further processing, such as image-based material decomposition, which in turn can then be used to derive other spectral image results, such as monoenergetic images, or, for contrast agent aided protocols, iodine-no-water images, VNC (virtual non contrast) images, VC (virtual contrast) images, etc.

For example, optional post- processing may include using directly the completed projections for reconstruction of artifact corrected high/low kVp images that are in accordance with the measured data. These images could then be further processed, e.g., converted to material images. Thus, spectral processing is done in image domain. Alternatively, the spectral processing is done in projection domain on the completed projection data, and the (completed) spectral projection data so obtained is reconstructed in the second pass reconstruction to obtain the material images, or other spectral imagery.

Definitions

"*user*" relates to a person, such as medical personnel or other, operating the imaging apparatus or overseeing the imaging procedure.

In general, the term "*machine learning*" includes a computerized arrangement (or module) that implements a machine learning ("ML") algorithm. Some such ML algorithms operate to adjust a machine learning model that is configured to perform ("learn") a task. Other ML operate direct on training data, not necessarily using such as model. This adjusting or updating oft the model is called "training". In general task performance by the ML module may improve measurably, with training experience. Training experience may include suitable training data and exposure of the model to such data. Task performance may improve the better the data represents the task to be learned. Training experience helps improve performance if the training data well represents a distribution of examples over which the final system performance is measured. *See for example,* T. M. Mitchell, "Machine Learning", page 2, section 1.1, page 61.2.1, McGraw-Hill, 1997. The performance may be measured by objective tests based on output produced by the module in response to feeding the module with test data. The performance may be defined in terms of a certain error rate to be achieved for the given test data.

BRIEF DESCRIPTION OF THE DRAWINGS

Exemplary embodiments of the invention will now be described with reference to the following drawings, which, unless stated otherwise, are not to scale, wherein:

Fig. 1 shows a block diagram of a tomographic imaging arrangement;
Fig. 2 illustrates operation of an image-domain based image correction system that may be used in the arrangement of Fig. 1;
Fig. 3 shows a block diagram of components of the correction system such as shown in Fig. 2;
Fig. 4 shows a training system for training, based on training data, a machine learning model for use herein in some embodiments, such as in system of Fig. 2 or 3;
Fig. 5 shows a flow chart of a method of image processing, in particular for facilitating tomographic imaging, and
Fig. 6 shows a flowchart of a machine learning method for training, based on training data, a machine learning model for use herein.

DETAILED DESCRIPTION OF EMBODIMENTS

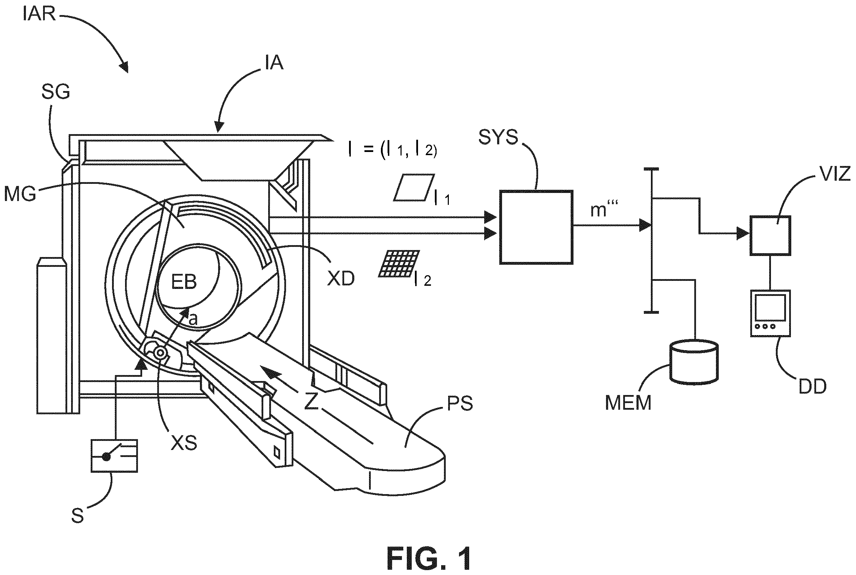

Reference is now made first to Fig. 1 which shows an imaging arrangement IRA envisaged herein in different embodiments, preferably in the medical domain.

The imaging arrangement IRA may include an imaging apparatus IA (sometimes referred to herein simply as the "imager"), and a computing system SYS. The computing system SYS is operable to process data provided by the imaging apparatus IA. The imaging apparatus IA is preferably of the tomographic type and could be X-ray based, or be of any other modality such as nuclear, MRI (magnetic resonance imaging), ultrasound, OCT, other. However, in the following, main reference will be made to X-ray based tomographic imaging, such as with a CT scanner IA as shown in said Fig. 1.

The imaging approach envisaged herein is multi-directional and multi-channel. The multi-directionality is because, in tomographic imaging, projection data λ is acquired along plural different spatial directions α, relative to the region of interest ("ROI") to be imaged. Particulars of the projection data acquisition will be described in more detail below. The so acquired multi-directional projection data λ can then be combined by a reconstruction operation into sectional imagery of the region of interest. Such sectional imagery may include a single slice or may include multiple slices, or a volume, as needed. Such sectional imagery provides a non-invasive means to gain an understanding of internals of the patient. This understanding can provide valuable clues and inform therapy and diagnosis and other tasks.

In addition, and on top of the said multi-directional acquisition setup, the imaging arrangement as envisaged herein is also multi-channel in that at least two sets of projection data are acquired λ= (λ1, λ2). The following will focus on 2-channnel acquisition which yields 2 such sets, simply demoted herein as λ1, λ2, but it will be understood that the principles described and claimed herein are not confined to such two /dual-channel setups, but are equally applicable to multi-channel setups where there are more than two such sets λj, j>2.

In general, in dual-channel imaging setups, the different sets represent different measurement principles, and/or different responses of the measured matters, such as tissue or material types, to measurement signals. Thus a "channel", as used herein, is a measurement, or a computed result, that represents different aspects of the same object/system (eg patient, or part of patient (organ (part), tissue type, internal material, etc). For example, in some embodiments of dual-channel imaging, the two data sets correspond to exposure to X-radiation at different spectra, such as in the case of spectral imaging (dual energy imaging), such as spectral CT. Thus, ideally, for each projection direction α, there should be two projection frames, one low energy frame and a high energy frame, each derived respectively by exposure to low energy and high energy radiation. The low energy frames form one such set λ1, whilst the high energy frames form the (at least one) other set λ2. For the sake of brevity, set λ1 and set λ2 may be simply referred to herein as the low energy (projection) data (set), and the high energy (projection) data (set), respectively.

Such multi-directional and multi-channel projection data λ = (λ1, λ2) can be combined by spectral processing and/or tomographic reconstruction to compute spectral imagery that have many advantages over conventional, purely energy integrating, imagery. For example, spectral imagery allows material specific contrast in the imagery to form, or contrast that represents different physical processes in operation during matter radiation interaction in the acquisition process, etc. Aspects of spectral imaging will be described in more detail below. In some such multi-directional and multi-channel imaging settings, such as in spectral CT imaging (of main interest herein, there may be certain deficiencies in the acquisition process. Such deficiencies may lead to abandoning the above mentioned ideal acquisition expectation of having two different energy exposures per projection direction.

The acquired data set, the low energy set and the high energy set, may suffer from sparcity due to the acquisition set-up. As envisaged herein, one such spectral CT set-up may include fast kVp switching. Thus, a switch component S is operable during multi-directional data acquisition around the region of interest to switch the X-ray source XS to different voltages, thus causing X-radiation at the said different energy spectra. That is, the photons making up the X-ray beam in each case have different energies, higher in in one case, and lower in the other, or there may be three or more different such spectra for spectral imaging at 3 or more energy levels, as needed. That being said, dual energy is sufficient for most cases. Because the multidirectional acquisition frequency around the ROI (eg, acquisition during rotation in rotational imagers IA) is normally different from the switching frequency, the two-channel projection set λ, as said, is sparse and at least partly complementary. This may happen in particular in scanner where there is mechanical rotation of the X-ray source XR around the ROI. Whilst it may be possible in theory to slow down rotation frequency and/or synchronize with voltage switching, this may be undesirable, as this may slow down acquisition phase, thus negatively impacting imaging throughput and patient comfort. In addition, such a slow-down may increase the risk of incurring motion artifacts.

There is such data sparsity because the measurement information recorded in the data λ is less than needed for low artifact/artifact free imaging, and such lack of information is distributed in complementary manner it was found. Thus, the sparsity may give rise such, at least partial, complementary. Specifically, there may be a lack of information in one set say λ1 which is at least partly accounted or compensated for by the other set λ2. Thus, with particular reference to such switching based spectral imaging (spectral CT), the said complementary is such that projection frames that are available for one kVp level in one of the sets λ1 are those that are missing for the other kVp level in the other set λ2, and vice versa.

This sparsity and complementary give rise to certain image artifacts, in particular aliasing artifacts, when such data sets λ is used without further processing for reconstruction. For example, such artifacts may include streak artifacts. What is more is that such aliasing artifacts as present in the reconstructed imagery without such processing are themselves complementary. Applicant has conducted experiments where the artifact compromised imagery in image domain is combined by adding, averaging or similar. It is observed that the artifacts partially cancel each other out thus confirming the said complementary property.

What is proposed herein in embodiments is an image domain-based processing system SYS to mitigate, remove or otherwise reduce, such aliasing artifacts in the reconstructed imagery, that is, in image domain imagery that has been constructed from such sparse /complementary data sets λ1, λ2. The anti-aliasing artifact system may be referred to herein simply as the (aliasing) corrector system SYS. The corrector system SYS may be arranged at, or even integrated into, the imaging apparatus IA. For example, at least parts of the system SYS may be integrated into an operator console OC of imager IA, or into a workstation associated, or otherwise couplable to, the imaging apparatus IA. In other embodiments, the corrector system SYS may be arranged remotely, in a cloud setting for example, remote from the imaging apparatus and from supportive computing infrastructure such as workstation or console OC. Edge computing setup may be used for the system SYS relative to data generator (imager IA).

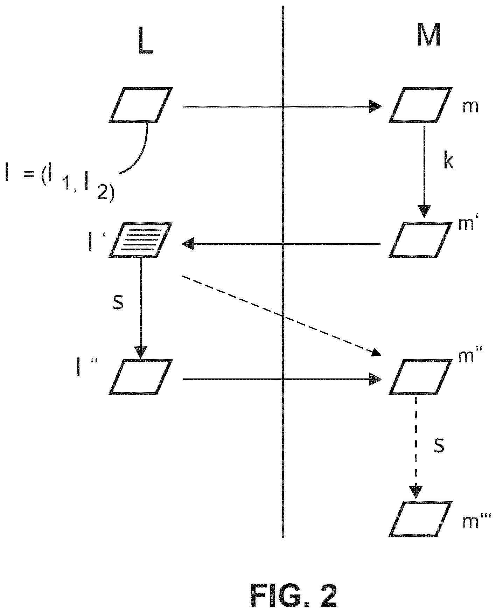

Before explaining operation of the corrector system SYS in more detail, reference is made first to the imaging set-up, in particular to the tomographic imaging set-up, as envisaged herein, followed by some explanations on spectral imaging, such as spectral CT imaging, as envisaged herein. This is then followed by more details on the operation of the corrector system SYS, from Fig. 2 onwards.

Initially, it should be noted first that the corrector system is mainly described herein with reference to X-ray based spectral CT of the voltage-source-("kVp")-switching type. However, this is not limiting herein, as any other tomographic modality, not necessarily X-ray based, can be used instead. Also, the said deficiencies in acquisition, and hence in the acquired data set having sparsity and/or complementarity as explained above, may also arise in other imaging set-ups, other than spectral imaging, and application of the proposed system SYS in other such imaging setups is also envisaged herein in different embodiments.

Referring now in more detail to the operation of the imaging apparatus IA as such, and in particular to its tomographic capability, the said imaging apparatus IA is operable to generate, in particular acquire, the multi-directional projection data $\lambda$, which may be forwarded through a communication channel (wired or wireless, or partly both) to the computing system SYS for reconstruction into tomographic (sectional) images, or additional processing such as spectral processing SP, or any other. The computing system SYS may run one or more reconstructors RECON, which implement one, or plural, reconstruction algorithms. In general, reconstruction algorithms implement a mapping that maps projection data $\lambda$ located in projection domain into image domain. Image domain is a portion of 3D space and is located in examination region ER of the imaging apparatus, whilst the projection domain is preferably in 2D, and is located at the (X-ray) detector XD of the imaging apparatus IA.

As said, the imaging apparatus IA is preferably of the tomographic type, and is preferably configured for multi-directional projection image acquisition. The imaging apparatus IA is thus capable of acquiring projection dat $\lambda$ along different projection directions $\alpha$ relative to the examination region ER, and thus the anatomical region ("ROI") of interest of the patient. Acquisition may be done in embodiments by a rotational system where at least the X-ray source XS is arranged in a moveable gantry MG. The movable gantry (and with it the X-ray source XS in embodiments) is rotatable in a stationary gantry SG around the examination region ER in which the patient/ROI resides during imaging. Opposite the X-ray source in the movable gantry MG there is the X-ray detector XD which may rotate with the gantry and X-ray source around the examination region ER to realize the different projection directions $\alpha$. As schematically indicated in Fig. 1, patient's longitudinal axis (imaging axis Z) may extend into the examination region ER during imaging. Patient PAT may lie on a patient support PS, such as a bed/couch, which is positioned at least partly in the examination region ER during imaging. In some, but not all embodiments, helical imaging protocols are envisaged herein, where there is a relative lateral motion along the longitudinal axis Z between X-ray source XS and the patient PAT. For example, the patient support PS may be advanced through the examination region ER during the multi-directional projection image acquisition, for example during rotation of the X-ray source XS around the patient.

The CT scanner setup as illustrated in Fig. 1 is merely according to one embodiment, and other tomographic imaging equipment, such as C-arm or U-arm scanners, Cone beam CT arrangements, mammographic imagers, etc, are not excluded herein. C-arm cone beam imager are preferred herein in some embodiments. In addition, the multi-directional acquisition capability may not necessarily result from a rotational system such as shown in Fig. 1. Non-rotational imaging systems are also envisaged, such as in CT scanners of the fourth or higher generation, where multiple X-ray sources are arranged around the examination region in a source annulus for example. In addition, or instead, the detector XD may be arranged as a detector annulus around the examination region. Thus, in such systems there is no rotation of the X-ray source XS or detector XD, or of both. Thus, the said multi-directional acquisition frequency may be a rotation frequency or may be the switching frequency of the plural X-ray sources in non-rotational multi-source setups.

There may be an operator console OC through which a user, such as medical personnel, controls imaging operation. For example, user may request initiating the image acquisition or may request reconstruction or other operations, or may initiate transmission of data to the computing system CS, or may halt such transmission as required.

During imaging, an X-ray beam XB issues forth, along the different projection directions $\alpha$, from a focal spot of the X-ray source(s) XS. The beam XB passes through the examination region with the patient in it. The x-radiation interacts with patient tissue. The X-ray beam XB is modified as a result of this interaction. In general, such X-ray beam XB modification includes attenuation and scattering of the original incoming X-ray beam. The modified X-radiation is then detected as a spatial distribution of various intensities at X-ray sensitive pixels of the detector XD. As mentioned above, switch S is operable to switch source XS' cathode vs anode voltage during acquisition, for example, during such rotation of source XS,

It is not necessary herein to acquire projection images $\lambda$ over a full 360° angular range around the examination region ER. Acquisition over a partial angular range such as a range of 270°, 180°, or even less may be sufficient. The X-ray detector is preferably configured for acquisition of 2D projection images with rows and columns of intensity values as registered by the detector pixels. That is, the detector pixels themselves may be arranged in a matrix layout. Such a 2D layout may be used in divergent imaging geometries, such as cone or fan beam or others. However, one dimensional detector pixel layouts (such as along a single line) are not excluded herein, and neither are parallel beam geometries.

The reconstructor RECON implements one or more reconstruction algorithms to process the projection imagery. Specifically, the reconstructor RECON may compute sectional image V of the examination region (with the patient in it) for diagnostic, therapeutic or other purposes. The reconstructor RECON may be able to produce tomographic imagery $m,m'm'',m'''$, such as sectional volumetric imagery. However, this does not exclude producing a single image slice in the examination region as required. Thus, the reconstructed imagery $m,m'm'',m'''$ may include the whole volume, a partial volume or a specific section therethrough. Volumetric reconstruction may be facilitated by the helical movement and/or the 2D layout of the X-ray detector XD.

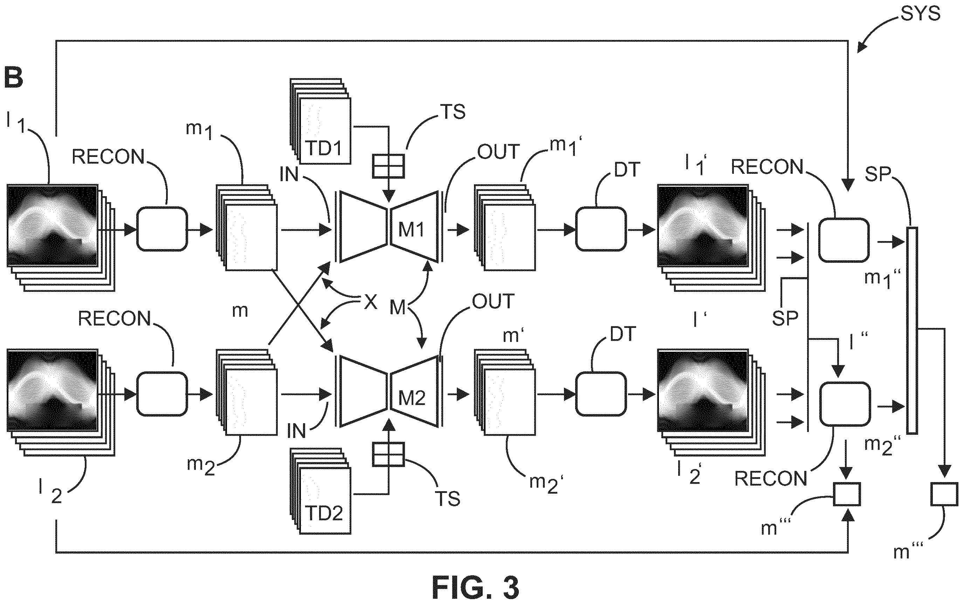

Reconstruction algorithms as used herein by reconstructor RECON may be of the iterative type. That is, based on a given set of projection data (eg, components images $c_\omega$), such reconstruction algorithm proceeds in iterative fashion by populating voxel grids of the image domain with image values. The image values are then adapted based on backward projection and, optionally, on forward projection, as required. Thus, the reconstruction algorithms as envisaged in some embodiments may thus use such a back projection operation which maps from projection domain back into image domain, whilst forward projection operation is the reverse operation as it maps from image domain into projection domain. Other tomographic reconstruction algorithms such as filtered back-projection, iterative reconstruction, algebraic reconstruction, etc are also envisaged. Whichever tomographic reconstruction algorithm is to be used herein, the forward projection operation DT is used herein in some embodiments to improved imagery, as will be explained in more detail below at Figs 2,3.

With continued reference to Fig. 1, the reconstructed imagery $m,m'm'',m'''$ may be visualized by a visualizer VIZ. The visualizer VIZ may generate a graphics display of the volume or a given slice. The graphics display may be displayed on a display device DD. The visualizer VIZ may map a section of reconstructed imagery $m,m'm'',m'''$, or the image volume V as a whole, onto a grey value or a color palette. The visualizer VIZ may control, via suitable interfaces, video circuitry to effect display of the graphics display on the display device DD. In addition or instead of so displaying, the reconstructed imagery $m,m'm'',m'''$ may be stored in a memory for later review or for other types of processing. Such a memory MEM may include an image repository, such as a database (eg, PACS), or other (preferably) non-volatile data storage arrangement. The reconstructed imagery $m,m'm'',m'''$ may be further processed, analyzed, as needed.

The reconstructed imagery $m,m'm'',m'''$ may be manipulated, for example by reformatting, to define cross-sectional planes that are different from the sectional plane defined by the imaging geometry. Such reformatting may allow medical user to better discern tissue type or anatomic details of the internals of the patient, in dependence on the medical purpose at hand, such as for diagnosis or preparation for some type of treatment, etc.

The reference signs $m,m'm'',m'''$ are used herein in connection with different types or kinds of reconstructed image domain imagery, or imagery derived therefrom such as by spectral processing, will be explained below in more detail. Not all such different kinds may of imagery may need to be displayed, although they may well be. In general, any selection of one, or more of such imagery may be displayed or may be needed for further processing, analysis, storage, etc.

Referring now to the spectral imaging aspect in more detail, this an imaging technique capable to extract more information from the acquired data as compared to conventional energy-integrating-only imaging. In more detail, spectral imaging as envisaged herein in some embodiments, is an imaging technique that utilize energy dependent X-ray absorption in order to enrich contrast in X-ray based imaging. Clinical applications of spectral imaging may be used in CT imaging as envisaged herein ("spectral CT"). In general, spectral imaging provides improved contrast-to-noise ratio. This can be used for better image quality ("IQ"), or it may be used to reduce X-ray dose, and/or to reduce contrast agent dose, whilst still keeping imaging quality at a required level. Spectral imaging is a technique that is partly hardware and software based. The imaging hardware is configured to allow acquisition of the said sets $\lambda1, \lambda2$ as projection data at different X-ray energies for any given projection direction. Suitable imaging hardware setups include spectral sensitive detectors (dual-layer detectors), multi-source imaging, filtering, etc. What is preferred herein however is another option, namely the said *kVp*-switching of tube XS voltage by switch S. The so acquired multi-energy projection data is then image-processed by a spectral imaging algorithm, to obtain spectral imagery at better contrast-to-noise ratio, or for material specific imaging, etc. Effects of intervening structures any materials can be eliminated unlike in conventional, purely energy integration imaging. Thus, the material specific imagery may allow an accurate estimation of the distribution of the material of interest. Materials of interest may include bone, contrast agent (such as Iodine, administered prior imaging to enhance image contrast of natively radiation transparent structures). The contrast agent specific imagery is also sometime referred to as the said VC ("virtual contrast-only image). Other spectral image types include the said VNC (virtual non-contrast) imagery, said monochromatic imagery at any set energy which may be different from the at least two energies used in the acquisition. Thus, rather than imaging for material specific contrast, spectral imaging allow imaging for specific physical processes of matter vs radiation interaction, such as the said monochromatic imagery. Other such physical process based imagery may include any one of Compton scattering imagery or photo-electric absorption imagery, with Compton scattering and photo-electric absorption being the two dominant effects at play in matter vs radiation interaction.

Spectral processor SP as envisaged herein may implement a material or physical effect decomposition algorithm, being one example of a spectral imaging algorithm as envisaged herein in embodiments. One example include the algorithm by R *Alvarez & A Macovski* as in their US patent US 4,029 963, and the same authors in "Energy-selective Reconstructions in X-ray Computerised Tomography", published in "Physics in Medicine & Biology", vol 21 (5) , p 733, 1976) or cognates thereof. In *Alvarez et al,* and related approaches, a priori known attenuation coefficients of "base" materials (material of interest) are used. Thanks to the projection imagery $\lambda 1$, $\lambda 2$ acquired at the at least two different spectra/energies, a system of simultaneous equations can be solved. Such system of simultaneous equations is solved to obtain the respective spectral imagery of the distribution of the respective base material.

It should be noted that whilst there are other spectral CT/ spectral imaging set-ups that do not suffer from the said acquisition deficiencies encountered in kVp switching, such as the said multilayer-detector or multi-source based imaging, such setups may require considerable overhead and outlay: new equipment must be procured and installed in existing CT imagers of the conventional energy integrating type, or sometimes new imagers must be procured altogether. This may be undesirable, in particular for cash-strapped national health systems. Thus, whilst the kpV switching spectral set-up may suffer from the described aliasing-artifact corruption due to the deficiency in acquisition phase, such approach has the advantage that existing energy integrating CT scanners can be repurposed for spectral imaging cheaply. For one, voltage switching capability configured to drive the X-ray source with different voltages is usually present in most X-ray imagers. At most, a switch system S capable of fast enough switching may need to be installed. However, this can be done relatively cheaply, and such outlay is of order of magnitudes cheaper than retro-fitting existing imagers with multi-source or dual layer detector systems.

Reference is now made to Fig. 2 which shows, as an overview, a schematic operator diagram. The diagram represents data spaces $\Lambda$, M involved and related operators. The diagram is to illustrate the proposed correction set-up implementable by the corrector system SYS. Specifically, the left portion of Fig. 2 represents the projection domain $\Lambda$, whilst the right portion represents the image domain M. The domains are schematically separated by a vertical line running down the center of the Figure. Arrows crossing the line represent tomographic-cross-domain transformations: arrows from left to right represent tomographic reconstruction operations, such as back-projection- based, or others. Arrows from right to left represent forward projections.

Broadly, operation of the corrector system may include multiple transitions in between those two spaces, effected by reconstruction/back-projections and forward projections. The correction system SYS can be understood as follows: it proceeds by processing as input the multi-channel complementary/sparse projection data set acquired by, for example, a switching-based spectral CT scanner, or any other imaging apparatus. This input data $\lambda$ is then transformed into image domain by 1$^{st}$-pass reconstruction to reconstruct a first version imagery *m.* This imagery *m* is then corrected in image-domain by the proposed correction system SYS into corrected image-domain imagery *m'*. The image-domain correction operation is indicated by operator $\kappa$. The so corrected image *m'* in image domain no longer suffers from the artifacts as *m* did. The image-domain effects of the complementarily missing views in the input data $\lambda$ are now corrected for, that is, is reduced, mitigated, if not eliminated. The corrected imagery *m'* is then forward projected by forward projection back into projection domain to obtain completing projection data $\lambda'$. The specific "missing view" sparsity from which the input data suffered is now mitigated, removed or corrected. The completing projection data $\lambda'$, preferably together with the original projection data $\lambda$, may then be reconstructed into artifact free imagery m" in a 2nd pass reconstruction.

Having obtained corrected imagery m" in image domain, and preferably associated corrected projection data $\lambda'$ in projection domain, spectral processing or other processing reliant on, or at least benefiting from, artifact-free data can be done. The said post-correction processing is schematically illustrated as operator $\sigma$. Such post-correction processing may be projection domain based or image domain based. Such post-correction processing may include, for example, spectral processing, such as material decomposition or other. Thus, spectral processing can be done in projection domain to obtain spectral projection data $\lambda''$ which can be reconstructed to obtain artifact reduced spectral imagery *m'''* in image domain.

Alternatively, spectral processing can be done instead in image domain as compared to the previous approach where projection operator $\sigma$ operated in projection domain. Such image domain spectral processing is illustrated as dashed arrow $\sigma$. Thus, now, it is the reconstructed corrected imagery *m"* is spectrally processed into the spectral imagery *m '''*.

It is understood that the two- or multi (j>2) channel property is maintained in the processing above, but is not shown for clarity in Fig. 2. Thus, there are in fact at least two reconstructed images m= m1, m2, one such image for each energy level, and so forth, and corresponding corrected imagery *m'= m1',m2'*, etc and similar for the projection data. Thus, there is, in general, per energy level (per channel) processing envisaged herein. Useful as the post-correction processing $\sigma$, such as spectral processing, is, this is not a necessity herein. Thus, in some cases there is no such post-correction processing. Thus, the corrected data m", $\lambda'$ may have value in and of itself, thus, may be stored, displayed, analyzed, etc, such as for teaching purposes for medical students, etc, or may be used as training data for machine learning for example, or any other application as may be the case. Even if there is post-correction processing, this may not necessarily include spectral processing. Other types of processing, for other purposes, may be done instead or in addition, as needed.

Reference is now made to the block diagram in Fig. 3 which shows operation of the corrector system SYS according to one embodiment, and in more detail, with per channel j *(j ≥2)* processing, expanding on the higher level operator schematics of Fig. 2.

Specifically, and referring briefly back to Fig. 2, the correction operation κ in image domain is preferably done by machine learning, that is, such operation may be based on one or more trained machine learning models M = (M1, M2), each trained by one or more training system TS per channel, as will be described in more detail below. The training can be done in a previous training phase, prior to deployment phase. Thus, once trained, the training models M1, M2 are made available for deployment phase in clinical use for example, operable by a user. Thus, the training system TS such as shown in Fig. 3 is merely for the sake of completeness, but may not need to be used during the deployment in clinical practice. However, this can still be done, such as to implement ongoing training with new data as such emerges in every-day clinical practice. Thus, instead of the training being a one-off event initially (and such is also envisaged), the system is trained repeatedly, eg at specific or random intervals. Thus, the system improves itself by re-learning the previously learned models M=M1, M2, using the earlier trained models as pretrained models for example.

As illustrated herein, a two-channel architecture of the model may be preferred herein, comprising two models M1 and M2, one for each energy channel *j*, and processing of respective data, derived from multi-channel input data λ1, λ2. However, such combo/dual model M1, M2 is not a necessity herein in all embodiments. Instead, a single multi-channel model can also be configured instead, into which are fed multi-channel data as respective input data in the respective channel.

In more detail, and proceeding now from left to right in Fig. 2, the complementary/sparse multi-channel projection data $\lambda = (\lambda 1, \lambda 2)$ is fed into the system per channel, as data stream $\lambda 1$ and $\lambda 2$, respectively, and, optionally, in one or more additional channels *j* for data $\lambda j, j>2$. However, for simplicity, we will refer to two channel processing as an example and for illustration.

In each channel, the respective projection data $\lambda = \lambda 1, \lambda 2$ is reconstructed by reconstructor RECON in the first pass reconstruction into respective imagery *m1, m2* in image domain. At this point, due to the sparsity in the data in each channel *j*, the first pass reconstruction yields artifact ridden imagery *m1, m2.* Such artifact ridden multi-channel reconstructed imagery *m1, m2* is then fed into one or more trained machine learning models M = M1, M2 for missing view correction (operation κ in Fig. 2 above). For illustration, it is assumed herein that plural models Mj=1, Mj=2 are used, the super model M thus being essentially a bank of corrector models, each model Mj configured to implement a respective correction operation κ, each geared for the specific energy channel *j* as far as spectral imaging is concerned. Each image *m1,m2* in need for correction is received at its respective model M1 or M2 for that channel at an input port IN, is processed there by the model M1,2, to obtain at output OUT the respective corrected imagery *m1', m2'*, still in image domain. Thus, the correction operates exclusively in image domain and no detour into projection domain is needed at this point. The corrected estimated imagery *m1', m2'* are estimates of how a reconstruction from projection data that did not suffer from the sparsity may look like. Specifically, for each channel, the estimate Mj(*mj*) is an estimate of an image-domain image, based on the views that were missing in the respective projection data input $\lambda j$ received in the respective channel *j* of the respective machine learning model Mj.

It is of note that, in preferred embodiments, the proposed correction operation by model Mj for a given channel j has a cross input feature, schematically marked up as " X " in Fig. 3. The input feature allows co-processing of data from different channels. Thus, for some or any channel, both channels are fed into the respective model Mj: Thus, any or some model in the given channel, may process the high energy image *m1* and the low energy image *m2* in order to compute the corrected low or high energy image *m1', m2'*. Thus, for any given channel, input form the other one (more channel) has been found to serve as data-based regularization information which can usefully guide the model to find the correct estimate m', and which may enhance learning, for more robust performance overall. Thus, for some or each processing of a given channel *j*, the reconstructed imagery from the one or more other channels $k \neq j$ are co-processed with the imagery mj for the given channel to compute to associated corrected image mj' for the said image mj in that channel. Such cross-channel-co-processing can be done for some or preferably each channel. If there are more than 2 channel, for some or each channel more than one other channel are so co-processed, preferably all other channels are so processed the given channel.

In preferred embodiments the so corrected imagery *m' = (m1', m2')* is for each channel processed by domain transformer DT, such as a forward projection component, to obtain now completing projection data $\lambda 1', \lambda 2'$ that can be understood as the complementing missing views in the respective channels. Thus, $\lambda 1'$ corresponds to the views that were missing in the initial channel $\lambda 1'$ whilst $\lambda 2'$ corresponds to those missing in $\lambda 2$, etc. Thus, in one embodiment, the completing $\lambda' = (\lambda 1', \lambda 2')$ forward projected data can be used together with the original projection data $\lambda$ to run a second pass reconstruction to thus obtain the artifact reduced imagery *m" = (m1", m2")*. Thus, output $\lambda' = (\lambda 1', \lambda 2')$ as such is not in itself "completed", but it completes when taken together with the original (but sparse) measured $\lambda$. For computational efficiency, the forward projection by domain transformer DT may be restricted to the respective missing views/directions in the respective channel. Alternatively, a full forward projection is done for all view directions.

The second pass reconstruction can be done with same reconstructor RECON as in 1st pass reconstruction.

Thus, the same module RECON may be revisited, Alternatively, a different reconstruction algorithm may be used, or the same with different settings, different reconstruction algorithms, etc.

The proposed stepwise processing with producing completing imagery m' and associated projection data λ' first, with downstream completion in the 2nd pass reconstruction has been found to have favorable noise behavior and thus yielding good quality results.

Again, as indicated in the very right part of the block diagram of Fig. 3, post-correction processing (operator σ in Fig. 2) based on corrected imagery m" or projection data λ' may be done such as spectral processing by spectral processor SP. The artifact reduced spectral imagery λ" and/or m‴ may be so obtained by operation of spectral processor SP. Spectral processor SP may implement a spectral processing algorithm as mentioned earlier, such as material decomposition based on *Alvarez et al*, or others. Such spectral or other processing can be done in either projection domain or in image domain as indicated and explained earlier above in Fig. 2. As said, post-correction processor (arrange downstream model M) may be configured to other than spectral processing, such as noise reducer, or other image enhancer.

The architecture of corrector SYS may be run on a single computing unit, or may be run in a distributed cloud setting instead. For example, whilst reconstructor RECON may be run on one or more computing platform/equipment, perhaps closer to the imager IA, as edge devices, the machine learning based processing, the model(s) M, may be run on other, possibly remotely located, computing equipment, such as a one or more servers. Optionally, distributed computing may be used for this and/or the reconstruction. Optional load balancing may be used to serve multiple clients, such as hospital, etc. Dedicated chipsets such as multi-core processors may be used to run ML models M for better responsiveness. GPUs may be used in some embodiments. Operations underlying computation by models M may be implemented as vector or matrix operations, such as multiplication. Thus, a "SDMI" paradigm may be so implemented.

As mentioned, machine learning ("ML") may be used for the correction operation κ. The correction operation to compute imagery m' may be based on trained machine learning models M= M1, M2. Different architectures and related learning setups may be envisaged herein. In some embodiments, models M1, M2 may be based on a respective artificial neural network type model (NN), preferably of the deep architecture type, where there are plural cascaded hidden layers of computational nodes between an input layer, and an output layer. Each layer comprises nodes with parameters θ (eg, sometimes called weights in particular in the context of NNs), adjusted in training phase, based on the training data. The data is feed into the input layer and is propagated as intermediate data (feature maps) through the hidden layers to then emerge as output (in training or deployment) as output. The input port IN may be implemented as such an input layer, and the output port OUT may be implemented as such an output layer of an NN model. Convolutional type NN models my be preferred where the nodes in some or each layer implement convolutional filters. Instead of, or in addition to convolutional layers, fully connected layers may be, especially at one of more layers that feed into the output layer. The output layer itself may be fully connected. Some of the layer may be convolutional, whilst others may be fully connected. Other layer types may be use in addition, such as pooling layers, dropout layers, etc. some or each node in the layers may implement a nonlinear activation function, such as *ReLU, softmax*, etc. Some layers may include such functions and may be implemented as activation layers. Such layers or activation functions may receive input form earlier convolutional and/or other layers, whilst the activation layer themselves may furnish input for subsequent layer, and so forth, thus implementing the said cascaded processing flow.

As shown by the "waisted" symbology in Fig. 3, some or each of the machine learning models Mj (Mj being used herein throughout as a generic reference to the model for either channel, such as model M1 or M2, etc) may have a bottleneck structure for each channel, or, if there is a single model, this too may be such a bottleneck structure.

Such models may include the said layers arranged in processing strands, one strand for dimensional down transformation, followed by another strand for up-transformation, thus leaving a "bottleneck". Thus, the originally fed-in imagery in each channel *j* is down transformed dimension-wise over multiple levels to obtain sequentially lower dimensional features maps having spatial dimension lower than the input data, until a representation of lowest dimension ("latent data") is obtained. The latent data is then sequentially up transformed in up-transformer strand again, over some levels, to match the dimension of the input image to so estimate the corrected or target imagery in deployment or learning, respectively. The levels in up and down-transformer strands may be the same. Such bottlenecked machine learning models can be based on said NN models. The down transformation strand may include processing strands of convolutional layers with variable stride, followed in the up-transformer strand by de-convolution layers to effect the up transformation. There may be data feed through additional connections between corresponding levels of dimensional transformation for better robustness. Thus, a feature map at a given level in down-transformer strand may be feed through in addition to another layer at a level in the up-transformer strand. Such bottlenecked convolutional networks allow multi-scale processing which has been found herein to yield good results. An example of such bottlenecked U-net type networks has been proposed in the past by *O Ronneberger et al* in "*U-Net: Convolutional Networks for Biomedical Image Segmentation*", available online as preprint on the arXiv service, under reference code *arxiv:1505.04597 [cs.CV]*, published 2015.

However, such bottlenecked CNN models are not a necessity herein. Other models, not necessarily of the NN type at all, my be used instead. Having said, NNs model CNN or not, have been found to yield good results when processing spatially corrected data, such as is the imagery m processable herein.

Generative type models, such as GANs. Such generative type models were described for example by *I Goodfellow et al* in "*Generative Adversarial Network*", available online as preprint in the arXiv service, under reference code *arXiv: 1406.2661 [stat.ML]*, published 2014. Other generative models may be used instead, such as variational autoencoders (VAE), and others still. Autoregressive models may be used.

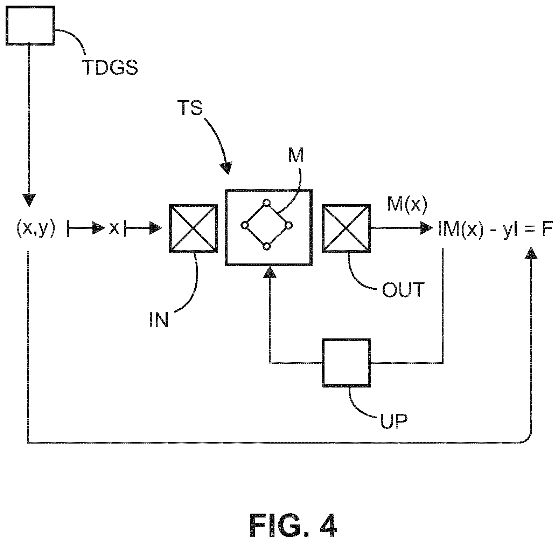

Reference is now made to Fig. 4 which shows a block diagram of training ML models M1, M2 or further such models, at least one such model *Mj* per channel, on training data TD = *{(x,y)}* as envisaged herein in some embodiments. Notation (x,y)* or *($x_k$, $y_k$)* may be used herein, with index "*k*" indicating an instance of such training data pair. The training pairs make up the training data set TD = TD1, TD2 in some embodiments, but not necessarily all embodiments, in particular for self-learning, non-supervised training setups also envisaged herein. The training data sets TD1, TD2 may be different for the channels *j,* such as for different energy levels *j* in spectral imaging.

Training for the various models *Mj* are similar and accordingly, with differing training data as per channel *j*. As said, the below it not restricted to bank of models, but a single multichannel in- and output model may be trained instead in a similar manner, considering all training data across channels at the same time. Having said that, training in the bank of models *Mj* setup may proceed in sequence, or may be implemented in parallel, as needed. The training system may be implemented on any computing system, but preferably on those with multi-core chipsets may be used for efficient parallelization of computation, even on a given channel *j* level. Again, as mentioned above in the context of deployment, GPUs or similar may be harnessed herein for training purposes.

In training phase, an architecture of a machine learning model Mj, such as the said CNN network, may be pre-populated with initial set of weights, or the weights are set from a pre-learning run. The weights $\theta$ of the model NN represent a parameterization $M^\theta$. The weights may include filter parameters of the convolutional operators. It is the object of the training system TS to optimize and hence adapt the parameters $\theta$ based on the training data $(x_k, y_k)^k$ pairs. In other words, the learning can be formulized mathematically as an optimization scheme where a cost function *F* is minimized although the dual formulation of maximizing a utility function may be used instead.

Assuming for now the paradigm of a cost function *F*, this may measure in some examples, the aggregated residue(s), that is, the summed error incurred between data estimated by the neural network model NN and the targets as per some ,or all, of the training data pairs *k* in a batch or over all training data:

$$argmin_\theta F = \sum_k || M^\theta(x_k), y_k || \qquad (1)$$

In eq. (1), function *M*() denotes the result of the model M applied to training input x. The result will differ in general from the associated target *y*. This difference, or the respective residuals for each training pair *k*, may be measured by a distance measure $\| \cdot \|$. Thus, the cost function *F* may be pixel/voxel-based, such as the *L1* or *L2*-norm cost function, or any other norm *Lp.* Specifically, the Euclidean-type cost function in (1) (such as least squares, MSE (mean square error) or similar) may be used for the regression task, which in the present context is the estimate, for given channel, of reconstructed image *m'*that represents a reconstruction from views (projection frames) that were missing in the input *m.* MSE may be preferred, but others may be used.

The output training data $M(x_k)$ is an estimate for target $y_k$ associated with the applied input training image data $x_k$. As mentioned, in general there is an error between this output $M(x_k)$ and the associated target $y_k$ for each pair *k*. An optimization procedure such as backward/forward propagation or other gradient based method may then be used to adapt the parameters $\theta$ of the model M so as to decrease the residue for the considered pair $(x_k, y_k)$ or, preferably for a sum of residues in batch (a subset) of training pairs from the full training data set.

The optimization procedure may proceed iteratively. After one or more iterations in a first, inner, loop in which the parameters $\theta$ of the model are updated by updater UP for the current batch of pairs $(x_k, y_k)$, the training system TS enters a second, an outer, loop where a next training data pair $x^{k+1}$, $y^{k+1}$ or a next batch is processed accordingly. The structure of updater UP depends on the optimization procedure used. For example, the inner loop as administered by updater UP may be implemented by one or more forward and backward passes in a forward/backpropagation algorithm or other gradient based setup, based on the gradient of *F*. While adapting the parameters, the aggregated, for example summed, residues of all the training pairs are considered. The aggregated residue can be formed by configuring the objective function *F* as a sum of squared residues such as in eq. (1) of some or all considered residues for each batch. Other algebraic combinations instead of sums of squares are also envisaged. In general, the outer loop passes over batches (sets) of training data items. Each set ("batch") comprising plural training data items and the summation in (1) extends over the whole respective batch, rather than iterating one by one through the training pairs, although this latter option is not excluded herein.

Optionally, one or more batch normalization operators (not shown) may be used. The batch normalization operators may be integrated into the model M, for example coupled to one or more of the convolutional operator in a layer. Batch operators allow mitigating vanishing gradient effects, the gradual reduction of gradient magnitude in the repeated forward and backward passes experienced during gradient-based learning algorithms in the learning phase of the model Mj. The batch normalization operators BN may be used in training, but may also be used in deployment.

The training system as shown in Fig. 4 can be considered for all learning schemes, in particular supervised schemes. Unsupervised learning schemes may also be envisaged herein in alternative embodiments. GPU(s) maybe used to implement the training system TS. The fully trained machine learning module Mj may be stored in one or more memories MEM' or databases, and can be made available as trained machine learning models for use in system SYS.

The training data sets TDj for the different channels j for training of respective model Mj may be compiled by a training data generator system TDGS.

Each training data set TDj may include sets of pairs $(x_k, y_k)^k{}_j$, with the lower index now indicting the channel/energy level.

Thus, for a given level $j$, and a given pair $k$, $x_k$ represents a historic reconstructed image of a ROI if interest for a certain patient, with artifacts caused by missing (sparse) views in the underlying projection data for the channel j. The associated target $y_k$ is a reconstructed image for the given channel j based on (only) those views that were missing from the projection data from which the training input $x_k$ was reconstructed. In addition, and in preferred embodiments, the views that are presented by the respective training input $x_k$ may be used additionally in the target. Thus, the target image $y_k$ may be reconstructed with full (non-sparse) data. A representative mix of different ROIs drawn from different patients (different age groups, gender, BMI, etc). A similar set is compiled for different channels j, such as two or more.

The compiling may be done based on complete reconstruction and projection data obtained in historic spectral CT scans as may be held in a patient data repository. Masking may be used to artificially simulate the complementary sparsity in the muti-energy historic patient data, with corresponding reconstructions returned, to so build up the sets $(x_k, y_k)^k{}_j$, for different k's and channels $j$. The said masking and reconstruction based on masked ("sparsed") data may be coordinated by the training data generator system TDGS. The said masking operation may include skipping (masking) certain frames (eg, every other, or every *n-th*, or at random) from the full projection data for a given energy level, λj. This leaves two depleted, hence sparse, sets: one set includes the removed frames, and the other set is made of the leftover frames. Each such artificially "sparsed" set is then reconstructed, to obtain reconstructed imagery x,y, and hence a training data pair $(x_k, y_k)$ is obtained for level $j$. This may be done for different ROIs and/or different patient full view data for variation. And the whole may then be done for some or all other levels $j$, to so build up the training data sets TDj for some or all channels j. Thus, to generate the full view training data for the fast-kVp switching scenario one can simply use two conventional scans at the two used kVp settings and sparsify the sinogram data by discarding even/odd views in an alternating manner for example.

Thus, having access to historical full view data, training data generator TDGS may generate the training-pairs for the image-based aliasing artifact correction algorithm. One model Mj=1 is trained to generate an artifact corrected low kVp image from artifact corrupted low and high kVp images. The other model Mj=2 is trained to generate the corrected high kVp image from the same input.

Data from repositories from different medical facilities, preferably from different geo-locations may be used to build data sets with good variation for better generalization capabilities of the models Mj

The mentioned cross input *X* feature (see Fig. 3 above) may be used only in training, but not in deployment. Alternatively, it is used in training and deployment. Thus, in training, for a given channel $j$, it is not only $x^k{}_j$ that is feed into the model Mj in training, but instead one or more (preferably all) other such inputs $x^k{}_l$, $l \neq j$ from some or all remaining levels/channels $l$ are fed together into the model for co-processing to estimate target $y^k{}_j$ for this one channel $j$. A similar data input structure is done when training some or each other model l.

The cross-input X may be implemented in NN models by packing the input data $x_k$ from the different channels $l$, including the current channel, into a tensor structure, and have this tensor processed by the NN model Mj as a single input for example. The tensor may be stored and processed as a multidimensional data structure, eg, as an array. The processing may use tensor/vector/matrix multiplication or other SIMD operations for fast responsive implementation.

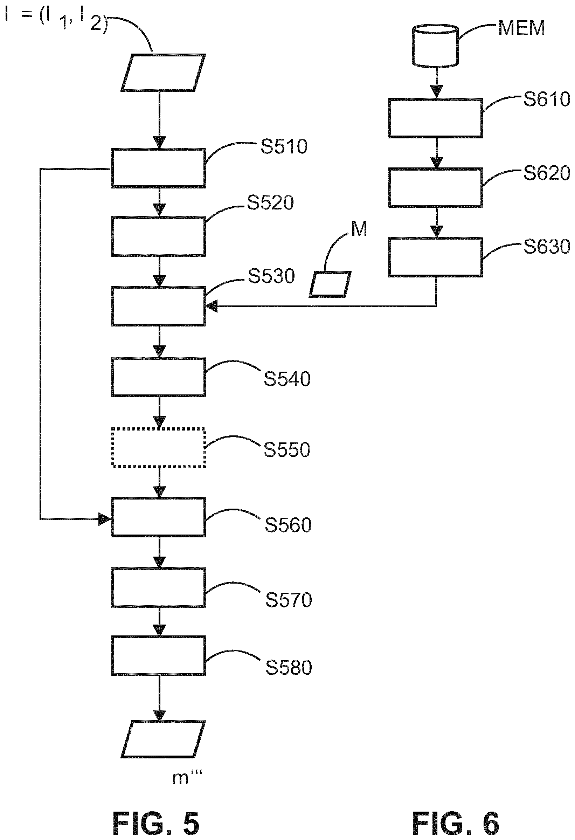

Reference is now made to Fig. 5 which shows a flow chart of a method of facilitating tomographic imaging based on sparse/complementary projection data, as mentioned above. Having said that, the method is not necessarily tied to the architectures shown above, but may be understood instead as a teaching in its own right. The method may be practiced as an anti-alias correction method to remove, or at least reduce, image artifacts, in particular alias artifacts, in reconstructed tomographic imagery and/or in underlying projection data. The artifacts so removed or at least reduced may stem from sparsity, in particular complementary sparsity, in the underlying projection data, due to deficiency in the acquisition mechanism of the imaging equipment used. For example, as mentioned earlier, in X-ray-source-switching based spectral protocols, such as spectral CT, the switching frequency may be different from the around-the-ROI projection data acquisition frequency (such as tube-rotation around ROI in mechanical settings, eg 2nd, 3rd generation scanners, etc).

Thus, the proposed method is applicable for spectral CT but may also be used in other contexts where multi-channel data arises such as in contrasted vs non-contrasted imaging (where contrast agent is admitted into the field of view), or any other. Also, the proposed method is not confined to CT imaging and indeed not confined to x-ray imaging. Other tomographic modalities, X-ray-based or not, CT or not, may be used instead. Interventional imaging such as with C-arms/U-arm imagers are also particularly envisaged herein. The method

At step S510 at least two sets $\lambda1$, $\lambda2$ of complementary projection data are received as acquired in a projection data acquisition by an imaging apparatus. One or both sets may comprise sparse views(frames), with at least some views included in one of the sets, whilst thee said some views are lacking in the at least one other set, and optionally vice versa. "*View(s)*" as used herein is not confined to spatial field-of-view (the portion of space being imaged), but may include other circumstance that define the view in the general sense, such as the energy used for the respective radiation exposure in that view, whether contrast is/or is not present, etc.

The method is described herein as an example for the two-channel case, but the method is seen to be readily extendable to imaging setups with more than two channels in which respective such sparse/at least partly complementary data sets $\lambda = \lambda j$, j>2 are received.

At step S520 a first tomographic reconstruction is done where the two channel projection data is mapped into image domain to obtain a respective reconstructed image per channel, m1, m2. Thus, only one such set is used for any given reconstruction, and each image m1*, m2* is reconstructed from a respective, different, set $\lambda1$ or $\lambda2$. At least one, both (in general all such imagery *m1,m2* are corrupted by artifacts at this point.

The reconstructed imagery *m1,m2* is then passed and a received at next step S530.

At step S530 an anti-alias correction is performed, preferably machine learning based Thus, Correction step S530 yields corrected imagery m1', m2', in image domain, with one such corrected image per channel. Artifacts in at least one, preferably all such imagery is now reduced/eliminated as a result of anti-alias correction operation S530.

Different such ML models may be used, one such model for each channel, each model trained so as to reduce/remove artifacts in the specific channel, such as energy channel in spectral imaging. Thus, a bank of such models Mj may be used.

Each or some of the models may be an NN model. It may be partly or fully convolutional, or may include, at least in parts, fully connected NN layers. The, or each, machine learning model may be enabled for multi-scale processing. The model may have a bottleneck structure. Autoencoders, or U-net type NN models may be used.

The corrected imagery *m1', m2'* is forward projected at step S540 to obtain respective, completing projection data $\lambda'$, again one such completing set per channel, $\lambda'=\lambda1'$, $\lambda2'$. That is, in two sets $\lambda'=\lambda1'$, $\lambda2$, one set for a given channel corresponds to the missing views in the or at least one other set in respective at least one other channel, such as energy channel in spectral imaging. Such improved, artifact reduced, projection data may be used herein in their own right.

Optionally, the projection data so obtained at S540 is passed on to a next step.

Optionally but preferably, in said next step a 2nd pass reconstruction (in addition to the first pass at step S520) may be done at said next step S550 to obtain globally artifact corrected imagery in the two channels, m1", m2", again one such image mj' per channel j. For this second pass reconstruction, preferably the completing forward projection data from step S540 is used in combination with the original data as received at step S510 to so compile a complete projection data set, based on which the globally artifact reduced reconstructed imagery as obtained at S550, and made available at S560 for post-processing at step SS570.

Optionally, spectral processing is done at step S570. The processing may be done in image domain in one embodiment on the so received second pass reconstructed imagery *m1", m2"* to obtain artifact reduced spectral imagery *m'''*, such as material specific imagery, virtual (non)contrast imagery, or any other, as mentioned above.

The so obtained imagery *m'''* can then be made available at S580 for storage, analysis, display or any other.

As an alternative, the spectral processing S570 is done in projection domain to obtain spectral projection data, such as material specific projection images, etc, which are then reconstructed at second pass at step S560 to obtain the artifact reduced spectral imagery m'''.

As said, the machine learning model as may be used in step S530 may be based on training the models M1, M2 on respective training data TD.

Thus, in a prior to using such models in the method of Fig. 1, there may be training phase. The training phase may be rerun later, by using new training data. The prior training may thus be understood as a pre-training for the later training.

A training method is illustrated in the flow chart of Fig. 6, to which reference is now made.

At step S610 training data is obtained, including reconstructed imagery. This can be obtained from existing stock of medical image data as may be found in medical databases, repositories, PACS. Masking may be used as described above at Fig. 4 to generate paired data (*x,y*) for an supervised training setup. No-supervised training of any kind is also envisaged herein. Alternatively, such training data imagery may be ML-generated itself, as needed, such as by using a generative model, such as the *GAN* framework, for example similar or as described in the reference by *I Goodfellow et al*, cited above.

At step S620 a suitable model is trained based on the training data. Once training is completed, the trained model is made available at step S630 for use in the correction operation of step S530 as explained above.

Training can be a one-off, thus, can be done initially or, as mentioned above, can be repeated, for example whenever new stock of training data has accumulated in deployment during clinical practice for example.

Preferably, at step S530 for correcting for the image in a given channel, both, that is two or more of the first pass reconstructed imagery from the other one or more channels is used for some or each such given channel. This combined or co-processing of more than one input data (eg, both *m1,'.m2'*) from different channels may allow mutual data-based regularizing with improved training behavior, and later more robust performance when processing results in deployment.

Step S610 may include generating training data from existing stock of spectral CT or other tomographic data, where full view is available, such as multi-energy spectral CT where dual layer detector or a multi-source equipment was used, as such equipment does not suffer from the type of complementary sparsity as kVp-switching/source spectra switching CT does. Instead of CT, projection data from other (eg, X-ray based) tomographic modalities may be used. The multi-energy full view projection data so sourced is then sparsed/sparsified to produce at least two sparse set per energy, and each is the reconstructed to obtain a pairs ($x,y$) (as mentioned above at Fig. 4), with deficient input image $x$ and target image $y$. y include the views missing in $x$, are thus complementary , and can be used for training of model $M_j$. This may be repeated for different channels/energies j, and preferably for such projection data from different ROIs and/or patients. A single model may be used instead with multiple processing strands, at least one for each channel *j*.

The components of system SYS may be implemented as one or more software modules, run on one or more general-purpose processing units such imager IA's console OC or workstation associated with the imager IA, or on a server computer associated with a group of imagers.

Alternatively, some or all components of system SYS may be arranged in hardware such as a suitably programmed microcontroller or microprocessor, such an FPGA (field-programmable-gate-array) or as a hardwired IC chip, an application specific integrated circuitry (ASIC), integrated into the imaging system IAR. In a further embodiment still, the system SYS may be implemented in both, partly in software and partly in hardware.

The different components of the system SYS may be implemented on a single data processing unit PU. Alternatively, some or more components are implemented on different processing units PU, possibly remotely arranged in a distributed architecture and connectable in a suitable communication network such as in a cloud setting or client-server setup, etc.

One or more features described herein can be configured or implemented as or with circuitry encoded within a computer-readable medium, and/or combinations thereof. Circuitry may include discrete and/or integrated circuitry, a system-on-a-chip (SOC), and combinations thereof, a machine, a computer system, a processor and memory, a computer program.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above-described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium (in particular, but not necessarily, a non-transitory medium), such as an optical storage medium or a solid-state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope. Such reference signs may be comprised of numbers, of letters or any of alphanumeric combination.

**Claims**

1.  An image processing system (SYS), comprising:

    at least one interface (IN) through which is receivable at least two input images (m 1, m2), reconstructable from initial projection data ($\lambda$) including sets of projection data ($\lambda$1, $\lambda$2) acquirable by a tomographic imaging apparatus (IA), the two sets being complementary;
    at least one trained machine learning model (M,M1, M2) capable of computing, based on the two input images (m1,m2), at least two output images (m1',m2');
    at least one domain transformer (DT) capable of transforming the at least two output images (m1', m2') from image domain into projection domain, to so obtain new projection data ($\lambda$'); and
    an output interface (OUT) for making available the new projection data ($\lambda$') and the initial projection data ($\lambda$) for reconstruction into at least one further image (m1", m2").

2.  The system of claim 1, further comprising a reconstructor (RECON) capable of reconstructing the at least one further image (m1", m2") based on the new projection data ($\lambda$') and the initial projection data ($\lambda$).

3.  The system of claim 1 or claim 2, wherein the machine learning model (M) is based on at least one artificial neural network model.

4.  The system of any one of the preceding claims, wherein the tomographic imaging apparatus (IA) is configured for spectral imaging.

5.  The system of claim 4, the two sets of projection data ($\lambda$1, $\lambda$2) corresponding to different acquisition energies, and/or wherein the two sets of projection data ($\lambda$1, $\lambda$2) correspond to different acquisition projection directions.

6.  The system of any one of the preceding claims, wherein the at least one domain transformer (DT) is capable of performing a forward-projection operation.

7.  The system of any one of the preceding claims, wherein there are at least two such further images (m1", m2") made available, and the system comprising a spectral imaging processor (SP) capable of any one of: i) applying a spectral processing algorithm to the two further images (m1", m2") to obtain spectral imagery (m‴) and ii) applying the spectral processing algorithm to the new projection data and making such available for reconstruction to so obtain the spectral imagery (m‴).

8.  A training system (TS) capable of training, based on training data, the model of a system as per any one of the preceding claims.

9.  A training data generator system (TGS), capable of providing the training data for training system of claim 8.

10. An imaging arrangement (IAR) comprising the system of any one of claims 1-9, and the imaging apparatus (IA).

11. An image processing method, comprising:

    receiving at least two input images (m1, m2), reconstructable from initial projection data ($\lambda$) including sets of projection data ($\lambda$1, $\lambda$2) acquirable by a tomographic imaging apparatus (IA), the two sets being complementary;

applying (S530) at least one trained machine learning model (M) to compute, based on the two input images (m1,m2), at least two output images (m1',m2');

domain-transforming (S540) the at least two output images (m1', m2') from image domain into projection domain, to so obtain new projection data ($\lambda$'); and

providing the new projection data ($\lambda$') and the initial projection data ($\lambda$) for reconstruction into at least one further image (m1", m2").

12. A machine learning training method for training, based on training data, the model of a system or method as per any one of the preceding claims.

13. A training data generator method for providing the training data for the training system of claim 8 or for the method of claim 12.

14. A computer program element, which, when being executed by at least one processing unit, is adapted to cause the processing unit to perform the method as per any one of claims 11, 12 or 13.

15. At least one computer readable medium having stored thereon the program element of claim 14, or having stored thereon the trained machine learning model of any of claims 1-13.

**FIG. 1**

EP 4 538 980 A1

**FIG. 2**

**FIG. 3**

EP 4 538 980 A1

**FIG. 4**

FIG. 5

FIG. 6

**EP 4 538 980 A1**

Europäisches Patentamt

European Patent Office

Office européen des brevets

# EUROPEAN SEARCH REPORT

**Application Number**

EP 23 20 2988

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Li Mengzhou: "Spectral CT at Ultra-High Resolution via Photon-Counting and Deep Learning", ProQuest Dissertations & Theses Global: The Sciences and Engineering Collection, August 2023 (2023-08), XP093146130, Retrieved from the Internet: URL:https://www.proquest.com/dissertations-theses/spectral-ct-at-ultra-high-resolution-via-photon/docview/2869454979/se-2?accountid=29404 [retrieved on 2024-03-27] * CHAPTER 3, "DEEP RECONSTRUCTION FOR DOSE REDUCTION" * | 1-15 | INV. G06T11/00 |
| | ----- | | |

**TECHNICAL FIELDS SEARCHED (IPC)**

G06T

The present search report has been drawn up for all claims

| Place of search | Date of completion of the search | Examiner |
|---|---|---|
| Munich | 27 March 2024 | Werling, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4029963 A

**Non-patent literature cited in the description**

- **T. M. MITCHELL,**. Machine Learning. McGraw-Hill, 1997, 1, 61.2.1

- Energy-selective Reconstructions in X-ray Computerised Tomography. *Physics in Medicine & Biology*, 1976, vol. 21 (5), 733